# EUROPEAN PATENT SPECIFICATION

(11) **EP 1 792 791 B1**
(45) Date of publication and mention of the grant of the patent: **06.07.2011**
(21) Application number: 06023829.2
(22) Date of filing: 16.11.2006
(51) Int. Cl.: B60R 21/34, B60R 21/0136, B60R 16/023

(54) **Collision detection apparatus**
Vorrichtung zur Erfassung eines Aufpralls
Dispositif de détection de collision

(30) Priority: 02.12.2005 JP 2005349530
(43) Date of publication of application: 06.06.2007
(73) Proprietor: DENSO CORPORATION, Kariya-city, Aichi-pref. 448-8661 (JP); TOYOTA JIDOSHA KABUSHIKI KAISHA, Aichi-pref., 471-8571 (JP); Hitachi Cable, Ltd., Tokyo 101-8971 (JP)
(72) Inventor: Ohtaka, Koji c/o Denso Corporation, Int. Prop. Dept., Kariya-city Aichi-pref., 448-8661 (JP); Kachu, Ryotaro c/o Toyota Jidosha Kabushiki Kaisha, Toyota-city Aichi-pref., 471-8571 (JP); Sekizuka, Makoto c/o Toyota Jidosha Kabushiki Kaisha, Toyota-city Aichi-pref., 471-8571 (JP); Kobayashi, Yoji c/o Hitachi Cable, Ltd., Tokyo, 101-8971 (JP); Tateishi, Hiroyuki c/o Hitachi Cable, Ltd., Tokyo, 101-8971 (JP)
(74) Representative: Kuhnen & Wacker

(56) References cited:
- EP-A- 1 702 812
- WO-A-2006/046771
- DE-A- 10 340 243
- DE-U1-202004 005 434

## Description

The present invention relates to a collision detection apparatus for detecting a collision of a vehicle.

A motor vehicle impact sensor disclosed in DE 10340243 includes members (22 24) have energy transmitting portions (26), and intervals of the energy transmitting portions (26) vary in a longitudinal direction of the members (22, 24).

The collision detection apparatus is for example disclosed in Japanese Patent Publication No. 5-116592 . The collision detection apparatus has an optical fiber, a light emitting element, a light conversion element, collision detection sensors and a collision detection circuit. Each collision detection sensor is constructed of a cylindrical base portion formed with a plurality of projections on its inner wall at predetermined intervals. The optical fiber extends along an outer periphery of a vehicle in a form of loop. The cylindrical base portions are arranged at plural locations on the outer periphery of the vehicle, and the optical fiber extends through the cylindrical base portions.

When a load is externally applied to the cylindrical portion due to a collision of a vehicle, the optical fiber is partly bent or deformed by the projections of the cylindrical base portion. As such, a light transmission characteristic of the optical fiber changes. The amount of light transmitted through the optical fiber decreases with an increase of the degree of the load. The collision detection circuit detects the decrease of the amount of light so as to detect the collision.

In fact, the load caused by the collision is differently transmitted depending a position of the collision because of structural differences of the vehicle. Namely, transmission of the load to the optical fiber is likely to be affected by the structure or shape of the vehicle on which the collision detection apparatus is arranged. Therefore, even if the same amount of load is applied, it is differently transmitted to the cylindrical portion depending on the position of the load. Moreover, the decrease of the light transmitted in the optical fiber is also affected by the position of the collision. As such, it is difficult to detect the collision accurately.

The present invention is made in view of the foregoing matter, and it is an object of the present invention to provide a collision detection apparatus for a vehicle, capable of accurately detecting a collision irrespective of a position of the collision.

According to a first aspect of the present invention, a collision detection apparatus has a light generating means, an optical fiber, a light receiving means, a determination means and a load transmission means. The light generating means generates light to be transmitted to the optical fiber. The light receiving means receives the light having been transmitted through the optical fiber. The determination means determines a collision based on a detection result from the light receiving means. The load transmission means is arranged along the optical fiber for transmitting a load caused by a collision to the optical fiber. The load transmission means defines an axis and a horizontal dimension extending through the axis and parallel to a horizontal plate of the vehicle. The horizontal dimension of the load transmission means varies along the axis such that equal loads at different positions are transmitted to the optical fiber within a predetermined range.

Accordingly, a load caused by a collision can be accurately detected irrespective of a position of the collision. The amount of load transmitted to the optical fiber can be adjusted by changing the horizontal dimension of the load transmission means. In the above structure, the horizontal dimension of the load transmission means varies along the axis such that equal loads at different positions are transmitted to the optical fiber within the predetermined range. Therefore, unevenness of load transmission to the optical fiber due to the shape of a portion of the vehicle on which the collision detection apparatus is mounted is reduced within a predetermined range. With this, decrease of the amount of light transmitted in the optical fiber due to the shape can be reduced within a predetermined range. Accordingly, detection accuracy improves.

For example, the horizontal dimension of the load transmission means is larger at positions corresponding to bent portions of a bumper reinforcement member than other positions thereof. As such, the load transmission at the positions corresponding to portions of the bumper reinforcement member other than the bent portions is enhanced. Loss of the load transmission due to the shape of the bumper reinforcement member such as warp or curved shape can be compensated. Therefore, the load can be properly transmitted to the optical fiber irrespective of the position of the collision.

According to a second aspect of the present invention, a collision detection apparatus has a light generating means, an optical fiber, a light receiving means, a collision determination means and a load transmission means. The light generating means generates a light to be transmitted to the optical fiber. The light receiving means receives the light having been passed through the optical fiber. The determination means determines a collision based on a detection result from the light receiving means. The load transmission means is arranged along the optical fiber for transmitting a load to the optical fiber. The collision detection apparatus further has a deformation regulating means for regulating the amount of deformation of the load transmission means in a direction perpendicular to a direction of a load applying direction such that equal loads at different positions are transmitted to the optical fiber within a predetermined range.

A load caused by the collision is transmitted to the optical fiber through the load transmission means. When the load is applied to the load transmission means, the load transmission means is compressed. Because the deformation regulating means is disposed to regulate the deformation of the load transmission means such that equal loads at different positions are transmitted to the optical fiber within the predetermined range, the decrease or loss of load transmission to the optical fiber can be reduced within a predetermined range.

Preferably, the deformation regulating means is disposed such that the equal loads at different positions are substantially equally transmitted to the optical fiber. Namely, the load transmission to the optical fiber is not affected by the shape of a portion on which the collision detection apparatus is mounted. Therefore, the collision can be accurately detected irrespective of the position of the collision.

For example, the deformation regulating means includes a wall portion. A horizontal dimension of the wall portion is adjusted such that equal loads at different positions are transmitted to the optical fiber within a predetermined range. For example, the horizontal dimension of the wall portion is larger at positions corresponding to bent or largely curved portion of a bumper reinforcement member than other positions thereof.

Other objects, features and advantages of the present invention will become more apparent from the following detailed description made with reference to the accompanying drawings, in which like parts are designated by like reference numbers and in which:
Fig. 1 is a schematic top view of a vehicle having an airbag system for protecting a pedestrian according to a first embodiment of the present invention;
Fig. 2 is an exploded perspective view of a bumper and a collision detection apparatus of the airbag system according to the first embodiment;
Fig. 3 is a plan view of a sensor supporting plate of the collision detection apparatus according to the first embodiment;
Fig. 4 is a cross-sectional view of the sensor supporting plate taken along a line IV-IV in Fig. 3;
Fig. 5 is a top view of the sensor supporting plate according to the first embodiment;
Fig. 6 is a side view of an optical fiber sensor of the collision detection apparatus according to the first embodiment;
Fig. 7 is an enlarged partial cross-sectional view of the optical fiber sensor, viewed in a horizontal direction, according to the first embodiment;
Fig. 8 is an enlarged partial cross-sectional view of the optical fiber sensor, viewed in a vertical direction, according to the first embodiment;
Fig. 9 is a top view of the optical fiber sensor according to the first embodiment;
Fig. 10 is an enlarged cross-sectional view of the optical fiber sensor taken along a line X-X in Fig. 9;
Fig. 11 is an enlarged cross-sectional view of the optical fiber sensor taken along a line XI-XI in Fig. 9;
Fig. 12 is an enlarged cross-sectional view of the optical fiber sensor taken along a line XII-XII in Fig. 9;
Fig. 13 is a side view of the sensor supporting plate on which the optical fiber sensor is supported according to the first embodiment;
Fig. 14 is a top view of the sensor supporting plate on which the optical fiber sensor is supported according to the first embodiment;
Fig. 15 is an enlarged cross-sectional view of the sensor supporting plate with the optical fiber sensor taken along a line XV-XV in Fig. 14;
Fig. 16 is an enlarged cross-sectional view of the sensor supporting plate with the optical fiber sensor taken along a line XVI-XVI in Fig. 14;
Fig. 17 is an enlarged cross-sectional view of the sensor supporting plate with the optical fiber sensor taken along a line XVII-XVII in Fig. 14;
Fig. 18 is a schematic cross-sectional view of the bumper of the vehicle with the collision detection apparatus according to the first embodiment;
Fig. 19 is a schematic diagram of a collision detection circuit of the collision detection apparatus according to the first embodiment;
Fig. 20 is an explanatory diagram for explaining an operation of the collision detection apparatus according to the first embodiment;
Fig. 21 is a top view of a sensor supporting plate of a collision detection apparatus according to a second embodiment of the present invention;
Fig. 22 is an enlarged cross-sectional view of the sensor supporting plate taken along a line XXII-XXII in Fig. 21;
Fig. 23 is an enlarged cross-sectional view of the sensor supporting plate taken along a line XXIII-XXIII in Fig. 21;
Fig. 24 is an enlarged cross-sectional view of the sensor supporting plate taken along a line XXIV-XXIV in Fig. 21;
Fig. 25 is a top view of an optical fiber sensor of the collision detection apparatus according to the second embodiment;
Fig. 26 is a top view of the sensor supporting plate on which the optical fiber sensor is supported according to the second embodiment;
Fig. 27 is an enlarged cross-sectional view of the sensor supporting plate with the optical fiber sensor taken along a line XXVII-XXVII in Fig. 26;
Fig. 28 is an enlarged cross-sectional view of the sensor supporting plate with the optical fiber sensor taken along a line XXVIII-XXVIII in Fig. 26;
Fig. 29 is an enlarged cross-sectional view of the sensor supporting plate with the optical fiber sensor taken along a line XXIX-XXIX in Fig. 26; and
Fig. 30 is an explanatory view of an operation of the collision detection apparatus according to the second embodiment.

Hereafter, preferred embodiments of the present invention will be described with reference to the drawings.

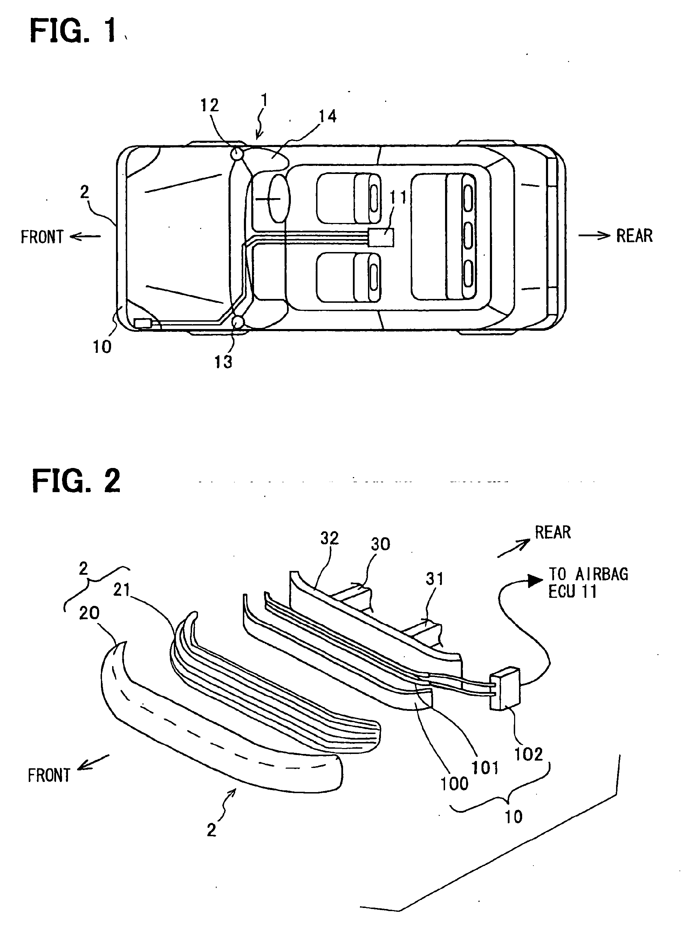

First, a first embodiment of a collision detection apparatus of the present invention will be described with reference to Figs. 1 to 20. As shown in Fig. 1, an airbag system 1 is mounted to a vehicle to reduce damage to a human (e.g., pedestrian) who has been collided with a bumper 2 of the vehicle. The airbag system 1 has a pedestrian collision detecting apparatus 10, an airbag ECU 11, pillar airbag expansion devices 12, 13, and a pillar airbag 14. In the first embodiment, the collision detection apparatus is for example employed as the pedestrian collision detection apparatus 10.

As shown in Fig. 2, the collision detection apparatus 10 is arranged along the bumper 2. The collision detection apparatus 10 detects a collision of the bumper 2 with a pedestrian. The airbag ECU 11 outputs a signal to expand the pillar airbag 14 based on a detection result of the collision detection apparatus 10. The airbag ECU 11 is located at a substantially middle portion of the vehicle.

The pillar airbag expansion devices 12, 13 are located adjacent to front pillars of the vehicle, respectively. The pillar airbag expansion devices 12, 13 are provided to trigger the pillar airbag 14 based on the signal from the pillar airbag ECU 11. The pillar airbag 14 is expanded in front of a windshield of the vehicle by the pillar airbag expansion devices 12, 13.

If the bumper 2 collides with a pedestrian, the pedestrian may subsequently fall over a hood and a windshield of the vehicle. The pillar airbag 14 is provided to reduce subsequent damage to the pedestrian. The pillar airbag 14 is installed adjacent to the front pillars. The collision detection apparatus 10 and the pillar airbag expansion devices 12, 13 are electrically connected to the airbag ECU 11, respectively.

The collision detection apparatus 10 has a sensor supporting plate 100, an optical fiber sensor 101 and a collision detection circuit 102, as shown in Fig. 2. The bumper 2 is constructed of a bumper cover 20 and an energy absorber (bumper absorber) 21. The bumper cover 20 is located along a front side of the energy absorber 21. The bumper 2 is mounted to a bumper reinforcement member 32.

The bumper reinforcement member 32 is supported at front ends of side members 30, 31 that construct a body of the vehicle. The bumper reinforcement member 32 has a shape corresponding to a shape of the bumper 2. Specifically, a right end portion and a left end portion of the bumper reinforcement member 32 are bent or curved in a vehicle rear direction. Thus, the bumper reinforcement member 32 has a middle portion, end portions and bent portions between the middle portion and the end portions. The bumper cover 20 is mounted to the bumper reinforcement member 32 through the energy absorber 21.

The optical fiber sensor 101 is supported by the sensor supporting plate 100 between the energy absorber 21 and the bumper reinforcement member 32. The optical fiber sensor 101 is optically connected to the collision detection circuit 102. Further, the collision detection circuit 102 is electrically connected to the airbag ECU 11.

Next, the collision detection apparatus 10 will be described in detail. The sensor supporting plate 100 is a member for supporting the optical fiber sensor 101. The sensor supporting plate 100 is made of resin and has a generally rectangular plate shape.

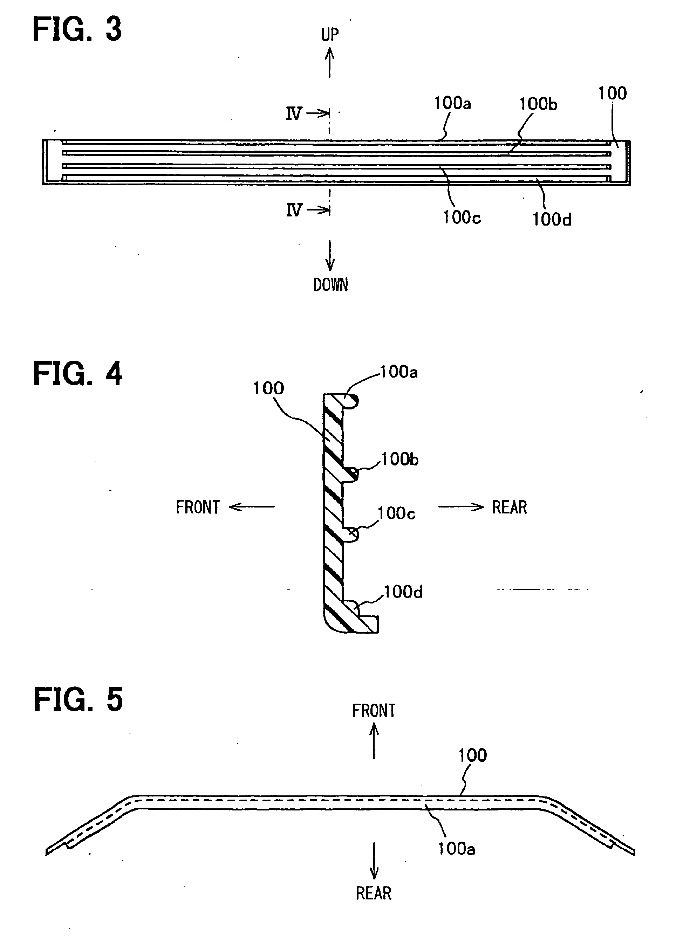

As shown in Figs. 3 and 4, the sensor supporting plate 100 is formed with ribs 100a to 100d on its rear surface that faces the bumper reinforcement member 32. The ribs 100a to 100d project from the rear surface of the sensor supporting plate 100. Also, the ribs 100a to 100d extend in a longitudinal direction of the sensor supporting plate 100.

A first rib 100a and a second rib 100b are spaced at a predetermined distance so as to securely hold the optical fiber sensor 101 between them. Likewise, a third rib 100c and a fourth rib 100d are spaced at a predetermined distance so as to securely hold the optical fiber sensor 101 between them.

As shown in Fig. 5, a right end portion and a left end portion of the sensor supporting plate 100 are bent in the vehicle rear direction so as to correspond to the shape of the bumper reinforcement member 32. The rib 100a defines an axis and a horizontal dimension in the vehicle front and rear direction, i.e., in a direction that a collision load is applied (hereafter, load applying direction). In other words, the horizontal dimension is defined in a direction extending through the axis and parallel to a horizontal plane of the vehicle. The horizontal plane is parallel to a surface that the vehicle travels on.

The horizontal dimension of the rib 100a is constant from the right end portion to the left end portion of the sensor supporting plate 100. That is, the rib 100a extends from the right end portion to the left end portion of the sensor supporting plate 100 with the equal width.

Further, the ribs 100b to 100d have the same horizontal dimension as the rib 100a. The ribs 100b to 100d extend from the right end portion to the left end portion of the sensor supporting plate 100 with the equal width.

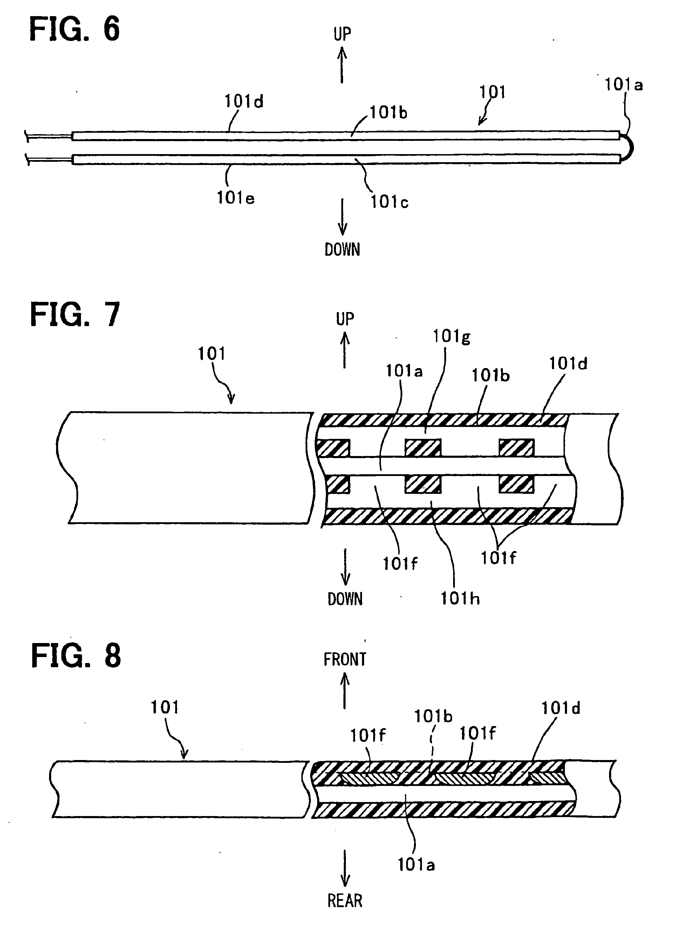

The optical fiber sensor 101 has a characteristic that the amount of light transmitted therein reduces when a load is applied thereon. As shown in Fig. 6, the optical fiber sensor 101 has an optical fiber 101a, load concentration plates 101b, 101c, and load transmission members (load transmission means) 101d, 101e.

In the optical fiber 101a, a light is transmitted from an end to the other end. When the optical fiber 101a is bent or deformed by a load, a characteristic of the light transmitted in the optical fiber 101a changes. Namely, the amount of light transmitted in the optical fiber 101 a reduces.

The optical fiber 101a is folded into a substantially U-shape. The load concentration plate 101b and the load transmission member 101d are mounted to an upper half section of the U-shaped optical fiber 101a. The load concentration plate 101c and the load transmission member 101e are mounted to a lower half section of the U-shaped optical fiber 101a.

As shown in Fig. 6, the optical fiber sensor 101 is arranged in a substantially U-shape. An upper half section and a lower half section of the optical fiber sensor 101 have the same structure. Therefore, a structure of the upper half section of the optical fiber sensor 101 will be described as n example, hereafter.

The load concentration plate 101 b is for example made of a metal. The load concentration plate 101 b has a structure to partly deform or bend the optical fiber 101a so as to transmit a load caused by a collision (hereafter, collision load) to the optical fiber 101a in a partly concentrated manner. The load concentration plate 101b has a generally rectangular shape.

For example, the load concentration plate 101b has a ladder-like shape. Specifically, the load concentration plate 101b has plural projections 101f and connecting portions 101g, 101h extending at ends of the projections 101f, as shown in Figs. 7 and 8. The projections 101f are arranged at predetermined intervals in a longitudinal direction of the load concentration plate 101b. The load concentration plate 101b is arranged such that rear surfaces of the projections 101f contact the optical fiber 101a.

The load transmission member 101d has a structure to transmit the collision load to the optical fiber 101a. The load transmission member 101d is made of a material having elasticity such as a silicone resin and has a generally rectangular parallelepiped shape. The load transmission member 101 surrounds the optical fiber 101a and the load concentration plate 101b. Namely, the optical fiber 101a and the load concentration plate 101b are embedded in the load transmission member 101.

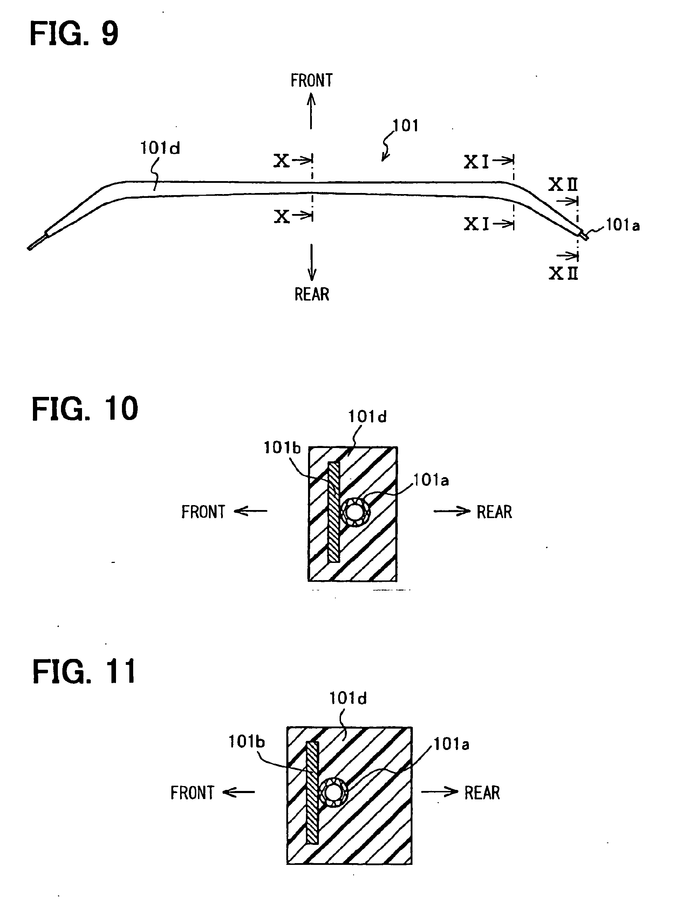

As shown in Fig. 9, a right end portion and a left end portion of the load transmission member 101d are bend in the rear direction along the shape of the bumper reinforcement member 32. The load transmission member 101d defines an axis and a horizontal dimension in the vehicle front and rear direction, i.e., in the load applying direction. Namely, the horizontal dimension is defined in a direction extending through the axis and parallel to the horizontal plane of the vehicle. The horizontal dimension of the load transmission member 101d varies across its length.

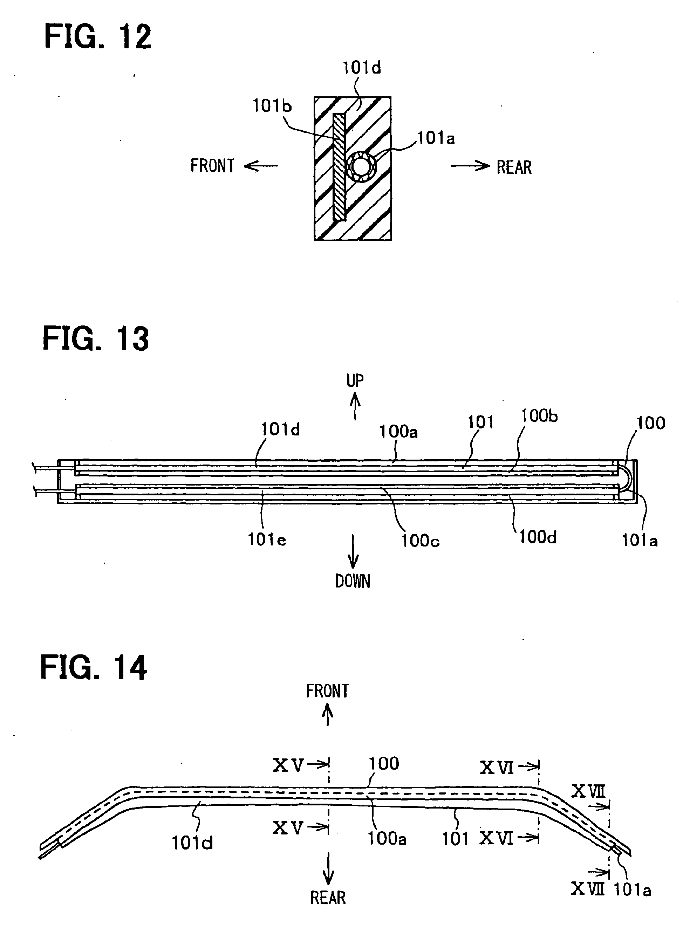

Specifically, the horizontal dimension of the load transmission member 101 d gradually increases from its middle portion (denoted by a line X-X in Fig. 9, Fig. 10) toward bent portions (denoted by a line XI-XI in Fig. 9, Fig. 11). Also, the horizontal dimension gradually reduces from the bent portions (denoted by the line XI-XI in Fig. 9, Fig. 11) toward the left end and the right end (denoted by a line XII-XII in Fig. 9, Fig. 12). The horizontal dimension is the maximum at the bent portions and is the minimum at the right and left ends. Further, the horizontal dimension of the load transmission member 101d is greater than the horizontal dimension of the ribs 100a, 100b.

As shown in Fig. 13, the load transmission members 101d is received between the first rib 100a and the second rib 100b on the sensor supporting plate 100. The bent portions of the load transmission member 101d correspond to bent portions of the sensor supporting plate 100.

Likewise, the load transmission member 101 e is received between the third rib 100c and the fourth rib 100d on the sensor supporting plate 100. Also, the bent portions of the load transmission member 101e correspond to bent portions of the sensor supporting plate 100.

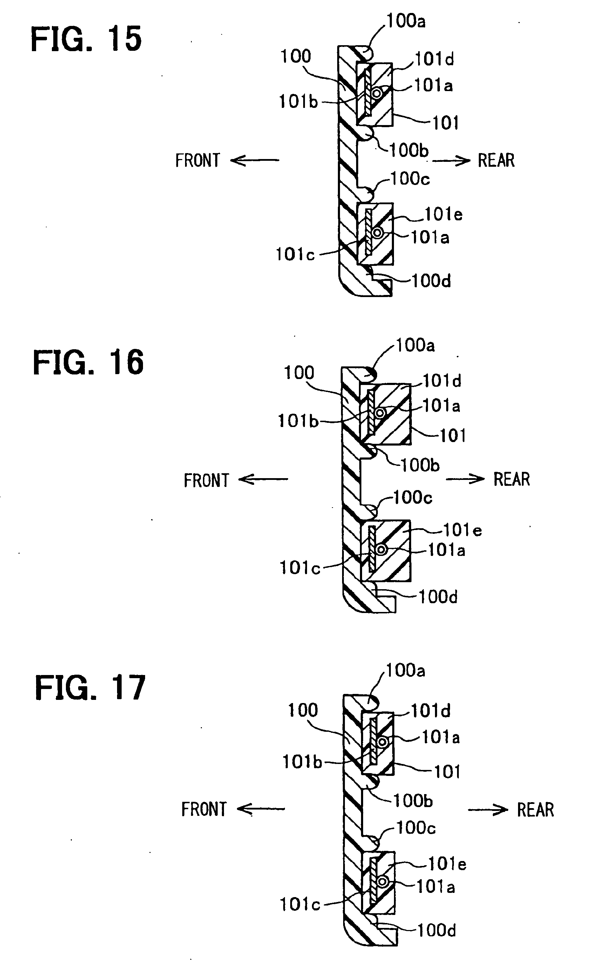

Accordingly, as shown in Figs. 14 to 17, the horizontal dimension of the load transmission members 101d, 101e varies depending on the position along the length. Specifically, the horizontal dimension of the load transmission members 101d, 101e gradually increases from a middle portion (denoted by a line XV-XV in Fig. 14, Fig. 15) toward bent portions (denoted by a line XVI-XVI in Fig. 14, Fig. 16) and is the maximum at the bent portions.

Also, the horizontal dimension of the load transmission members 101d, 101e gradually decreases from the bent portions (denoted by the line XVI-XVI in Fig. 14, Fig. 16) toward the left end and the right end (denoted by a line XVII-XVII in Fig. 14, Fig. 17) and is the minimum at the right and left ends. Further, the load transmission members 101d, 101e project more than the ribs 100a to 100d in the rear direction throughout the length, as shown in Fig. 14.

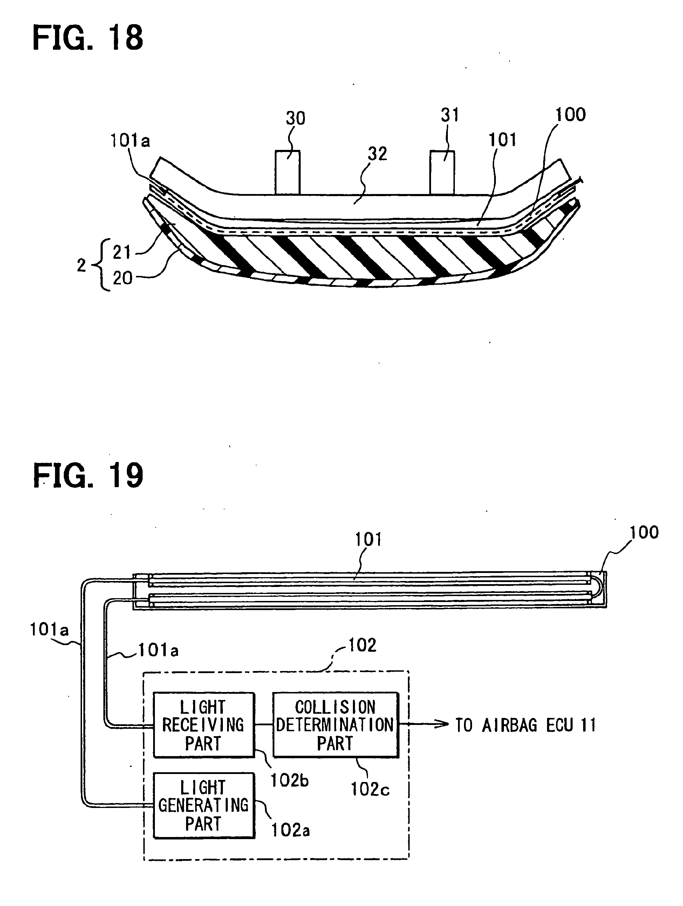

As shown in Fig. 18, the sensor supporting plate 100 supporting the optical fiber sensor 101 is arranged between the energy absorber 21 and the bumper reinforcement member 32 such that the optical fiber sensor 101 faces the bumper reinforcement member 32. The bent portions of the sensor supporting plate 100 and the optical fiber sensor 101 correspond to bent portions of the bumper reinforcement member 32.

The collision detection circuit 102 produces the light to be transmitted to the optical fiber sensor 101. Also, the collision detection circuit 102 detects a collision of the bumper 2 with a pedestrian based on the amount of light transmitted through the optical fiber sensor 101. As shown in Fig. 19, the collision detection circuit 102 has a light generating part (light generating means) 102a, a light receiving part (light receiving means) 102b and a collision determination part (collision determination means) 102c.

The light generating part 102a generates a light to be supplied into the optical fiber 101a. The light generating part 102a is optically connected to an end of the optical fiber 101a. The light receiving part 102b detects the amount of light having been transmitted in the optical fiber 101a. The light receiving part 102b outputs a signal with a level according to the amount of the light transmitted from the optical fiber 101a to the collision determination part 102c. The light receiving part 102b is optically connected to the remaining end of the optical fiber 101a.

The collision determination part 102c determines the collision of the bumper 2 with a pedestrian based on a detection result of the light receiving part 102b. When the level of the signal outputted from the light receiving part 102b is equal to or greater than a predetermined level, the collision determination part 102c determines that an object collided with the bumper 2 is a pedestrian. The collision determination part 102c is electrically connected to the light receiving part 102b and the airbag ECU 11, respectively.

Next, an operation of the collision detection apparatus will be described. When the bumper cover 20 collides with an object (e.g., pedestrian), a load generated by the collision (collision load) is transmitted to the optical fiber sensor 101 through the energy absorber 21 and the sensor supporting plate 100.

In the optical fiber sensor 101, the collision load is transmitted to the optical fiber 101a through the load transmission members 101d, 101e and the load concentration plates 100b, 100c (Figs. 15 to 17). The optical fiber 101a is partly deformed in accordance with the amount of the collision load. As such, the amount of light transmitting in the optical fiber 101a reduces.

In the light receiving part 102b, the light having passed through the optical fiber 101 a is received, and the amount of the light is converted into the signal and outputted to the collision determination part 102c. In the collision determination part 102c, it is determined that the object collided with the bumper 2 is a pedestrian or not based on the level of the signal outputted from the light receiving part 102b.

When the level of the signal is equal to or greater than the predetermined level, the collision determination part 102c determines that the object is a pedestrian. As a result, the airbag ECU 11 outputs the signal to the pillar airbag expansion devices 12, 13 for expanding the pillar airbag 14. Accordingly, the pillar airbag 14 is expanded to protect the pedestrian from subsequently colliding with the vehicle.

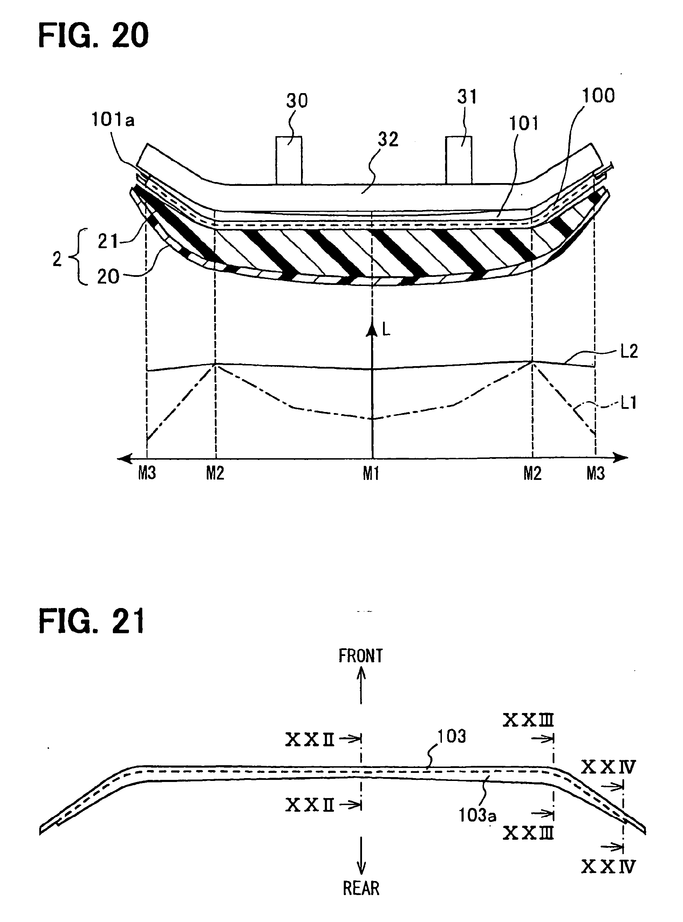

In a case that the horizontal dimension of the load transmission member is not varied, i.e., is constant across the length, the collision load L transmitted to the optical fiber is different depending on the position of the collision, as shown by a line L1 in Fig. 20. That is, when equal loads at different positions are differently transmitted to the optical fiber. In other words, the transmission of the collision load is affected by the position of the collision.

For example, in the result of L1, the collision load L transmitted to the optical fiber is low at a middle portion M1 corresponding to the middle portion of the bumper 2 and ends M3 corresponding to the ends of the bumper 2. The collision load L is the highest at portions M2 corresponding to the bent portions of the bumper 2. Further, the collision load L is the lowest at the ends M3.

Such an unevenness of the transmission of the collision load is caused by the shape (e.g., warp) of the bumper reinforcement member 32. Further, the decrease of the amount of light transmitted through the optical fiber is largely affected by the unevenness of the load transmission to the optical fiber. As such, it is difficult to accurately detect the collision depending on the position of the collision with respect to the longitudinal direction of the bumper 2.

On the contrary, in the first embodiment, the horizontal dimension of the load transmission member 101d, 101 e varies in accordance with the position across the length. In Fig. 20, a line L2 represents the collision load transmitted to the optical fiber 101a when equal loads are applied at different positions.

In the first embodiment, the horizontal dimension of the load transmission member 101d, 101e increases toward the bent portions from the middle portion and decreases toward the ends from the bent portions, as described in the above. Also, the horizontal dimension of the load transmission members 101d, 101 e is the maximum at the bent portions and is the minimum at the ends. Namely, the horizontal dimension of the portions other than the bent portions is smaller than that of the bent portions.

As such, the collision load is more easily transmitted to the optical fiber at the positions other than the bent portions than the bent portions. Therefore, the decrease of the load transmission due to the shape of the bumper reinforcement member 32 is compensated by varying the horizontal dimension of the load transmission member 101d, 101e.

Accordingly, as shown by the solid line L2 in Fig. 20, the collision load can be substantially equally transmitted to the optical fiber 101 a irrespective of the positions of the collision. Namely, the equal loads at different positions are transmitted to the optical fiber 101a within a predetermined range. In other words, the unevenness of the load transmission is reduced within a predetermined range that is smaller than the case denoted by the case L1. Therefore, the collision can be accurately detected irrespective of the position.

Next, advantageous effects of the first embodiment will be described. The horizontal dimension of the load transmission member 101d, 101e varies along the axis that the equal loads at different positions are transmitted to the optical fiber 101a within a predetermined range. As such, the unevenness of the load transmission to the optical fiber 101a can be adjusted. With this, the unevenness of the decrease of the amount of light transmitted in the optical fiber 101a can be reduced within a predetermined range, irrespective of the position of the collision.

Further, the load transmission members 101d, 101e surround the outer periphery of the optical fiber 101a. Thus, the collision load can be effectively transmitted to the optical fiber 101a.

Also, in the load transmission members 101d, 101e, the horizontal dimension is reduced at the positions other than the bent portions. Thus, the load transmission is enhanced at the positions other than the bent portions, as compared to the bent portions. Accordingly, the decrease of the load caused by the shape of the bumper reinforcement member 32 can be compensated. Thus, the collision of the bumper 2 with a pedestrian is accurately detected irrespective of the position of the collision on the bumper 2.

### (Second Embodiment)

Next, a second embodiment will be described with reference to Figs. 21 to 30. A collision detection apparatus of the second embodiment has a structure similar to the first embodiment except for the sensor supporting plate and the optical fiber sensor. The collision detection apparatus of the second embodiment has a sensor supporting plate (deformation regulating means) 103 and an optical fiber sensor 104, instead of the sensor supporting member 100 and the optical fiber sensor 101. Here, like components are denoted by like reference characters and a description thereof is not repeated.

In the first embodiment, the horizontal dimension of the load transmission members 101d, 101e varies in accordance with the position along the axis of the load transmission members 101d, 101e. In the second embodiment, instead, a horizontal dimension of the sensor supporting plate 103 varies along an axis of the sensor supporting plate 103.

First, structures of the sensor supporting plate 103 and the optical fiber sensor 104 will be described. The sensor supporting plate 103 supports the optical fiber sensor 104 and regulate the amount of deformation of load transmission members 104d, 104e. The sensor supporting plate 103 is made of a resin. The sensor supporting plate 103 has a generally rectangular plate shape.

As shown in Fig. 21, ends of the sensor supporting plate 103 are bent in the vehicle rear direction so as to correspond to the shape of the bumper reinforcement member 32. The sensor supporting plate 103 is formed with ribs (wall portions) 103a to 103d on its rear surface facing the bumper reinforcement member 32 for supporting the optical fiber sensor 104 and for regulating the amount of deformation of the optical fiber sensor 104. The ribs 103a to 103d project in the rear direction. Also, the ribs 103a to 103d extend along the axis of the sensor supporting plate 103.

A first rib 103a and a second rib 103b are spaced from each other such that the optical fiber sensor 104 is securely held between them. Likewise, a third rib 103c and a fourth rib 103d are spaced from each other such that the optical fiber sensor 104 is securely held between them.

The horizontal dimension of each of the ribs 103a to 103d varies along the axis of the sensor supporting plate 103. Here, the horizontal dimension is defined in a direction extending through an axis of the sensor supporting plate 103 and parallel to the horizontal plane of the vehicle. The horizontal plane is parallel to the surface that the vehicle travels on.

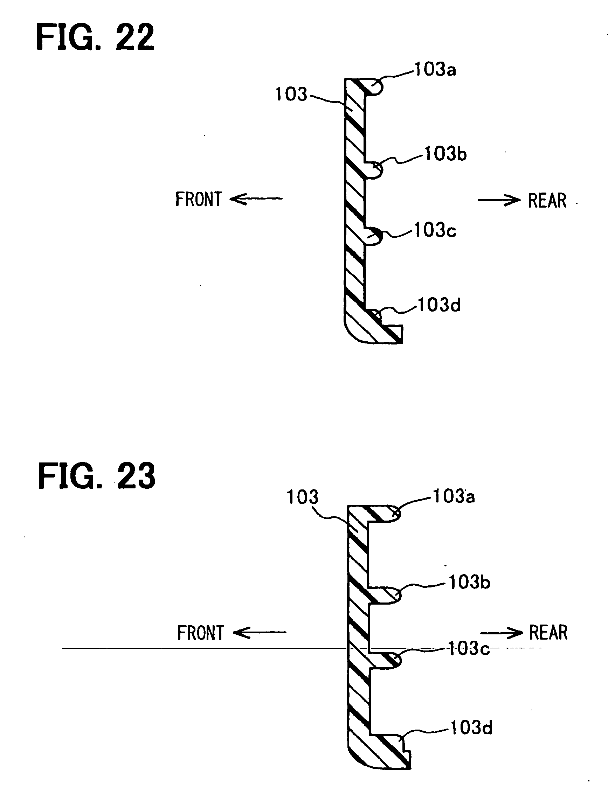

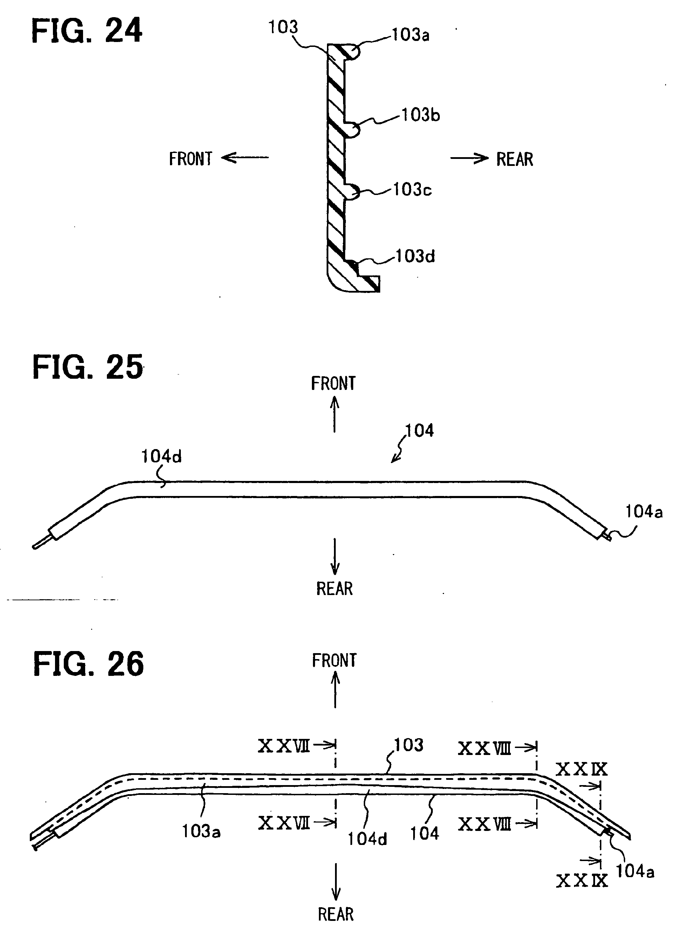

Specifically, the horizontal dimension of each of the ribs 103a to 103d gradually increases from a middle position (denoted by a line XXII-XXII in Fig. 21, Fig. 22) of the sensor supporting plate 103 toward bent portions (denoted by a line XXIII-XXIII in Fig. 21, Fig. 23) and is the maximum at the bent portions. Also, the horizontal dimension of each rib 103a to 103d gradually reduces from the bent potions toward ends (denoted by a line XXIV-XXIV in Fig. 21, Fig. 24) and is the minimum at the ends.

The optical fiber sensor 104 has load concentration plates 104b, 104c, similar to the load concentration plates 101b, 101c of the first embodiment. Also, the optical fiber sensor 104 has the load transmission members 104d, 104e for transmitting the collision load to the optical fiber 104a. Hereafter, the structure of an upper half section of the optical fiber sensor 104 will be described as an example because a lower half section of the optical fiber sensor 104 has a similar structure.

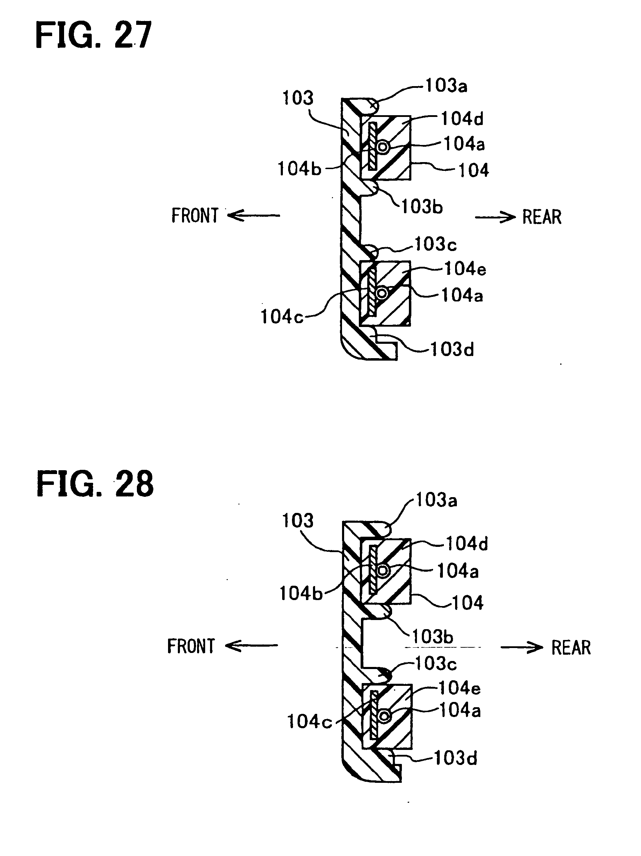

The load transmission member 104d is made of a material having elasticity such as a silicone resin. The load transmission member 104d has a generally rectangular parallelepiped shape. The load transmission member 104d surrounds the optical fiber 104a and the load concentration plate 104b for transmitting the collision load to the optical fiber 104a, as shown in Figs. 27 to 29.

The load transmission member 104d is bent at a right end portion and a left end portion in the rear direction so as to correspond to the shape of the bumper reinforcement member 32. Also, a horizontal dimension of the load transmission member 104d is constant in its longitudinal direction. Further, the horizontal dimension of the load transmission member 104d is larger than the horizontal dimension of the ribs 103a to 103d.

As shown in Figs. 26 to 29, the load transmission member 104d is arranged between the first rib 103a and the second rib 103b, and the bent portions of the load transmission member 104d correspond to the bent portions of the sensor supporting plate 103. Likewise, the load transmission member 104e is arranged between the third rib 103c and the fourth rib 103d, and the bent portions of the load transmission member 104d correspond to the bent portions of the sensor supporting plate 103.

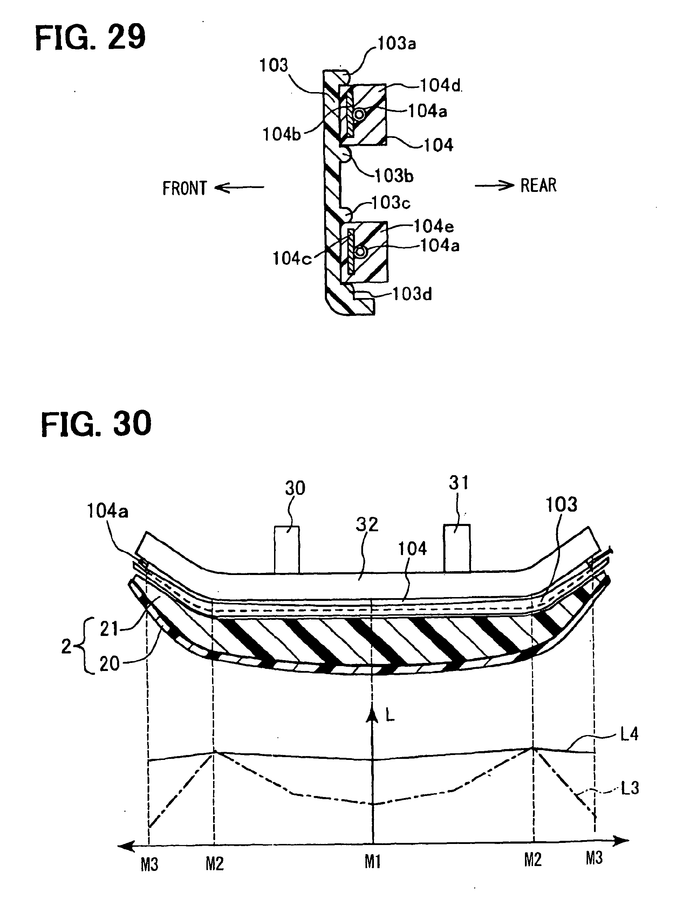

As such, the horizontal dimension of the ribs 103a to 103d gradually increases from the middle portion (denoted by a line XXVII-XXVII in Fig. 26, Fig. 27) toward the bent portions (denoted by a line XXVIII-XXVIII in Fig. 26, Fig. 28) and is the maximum at the bent portions. Also, the horizontal dimension of the ribs 103a to 103d gradually reduces from the bent portions toward the ends (denoted by a line XXIX-XXIX in Fig. 26, Fig. 29) and is the minimum at the ends. Further, the load transmission members 104d, 104e project more than the ribs 103a to 103d in the rear direction throughout the longitudinal direction.

As shown in Fig. 30, the sensor supporting member 103 supporting the optical fiber sensor 104 is arranged between the energy absorber 21 and the bumper reinforcement member 32 such that the optical fiber sensor 104 faces the bumper reinforcement member 32. Also, the bent portions of the sensor supporting member 103 correspond to the bent portions of the bumper reinforcement member 32.

Next, an operation of the collision detection apparatus of the second embodiment will be described. Particularly, operations of the ribs 103a to 103d and the load transmission members 104d, 104e will be described.

Referring to Figs. 26 to 29, when a load is applied, the load transmission members 104d, 104e are compressed in the direction that the load is applied (load applying direction), i.e., in a direction parallel to the horizontal plane. With this, the load transmission members 104d, 104e are deformed in a direction perpendicular to the load applying direction, i.e., in a direction perpendicular to the direction that the horizontal dimension is measured.

In this case, however, the ribs 103a to 103d are arranged along the upper and lower sides of the load transmission members 104d, 104e. Thus, the amount of deformation of each load transmission member 104d, 104e is regulated by the ribs 103a to 103d. The horizontal dimension of each of the ribs 103a to 103d gradually increases from the middle portion toward the bent portions and is maximum at the bent portions. Also, the horizontal dimension of each of the ribs 103a to 103d gradually reduces from the bent portions toward the ends and is the minimum at the ends. Namely, in the ribs 103a to 103d, the horizontal dimension of portions other than the bent portions is smaller than the horizontal dimension of the bent portions.

Accordingly, in the load transmission members 104d, 104e, the deformation of the portions other than the bent portions in the direction perpendicular to the load applying direction is allowed more than that of the bent portions. As such, the collision load is more easily transmitted to the optical fiber 104a at the portions other than the bent portions than the bent portions. Therefore, loss of the load transmission due to the shape of the bumper reinforcement member 32 is compensated.

Fig. 30 shows results when equal loads are applied at different positions. In Fig. 30, a line L3 represents a result of a case in which the horizontal dimension of the ribs 103a to 103d is constant in the longitudinal direction of the sensor supporting plate 103. A line L4 represents a result in the collision detection apparatus of the second embodiment.

As shown by the result L4, equal collision loads are substantially equally transmitted to the optical fiber 104a irrespective of the position in the second embodiment. Namely, unevenness of the load transmission to the optical fiber 104a is reduced within a predetermined range that is smaller than the result L3. As such, the collision can be accurately detected irrespective of the position in the longitudinal direction of the bumper 2.

Next, advantageous effects of the second embodiment will be described. In the second embodiment, since the deformation of the load transmission member 104d, 104e in the direction perpendicular to the load applying direction is regulated, the load transmitted to the optical fiber 104a can be adjusted. As such, the unevenness of the decrease of the amount of light transmitted through the optical fiber 104a can be set within a predetermined range.

Also, since the horizontal dimension of the ribs 103a to 103d varies, the deformation of the load transmission members 104d, 104e in the direction perpendicular to the load applying direction can be adjusted. Furthermore, since the ribs 103a to 103d are provided along both sides of the load transmission member 104d, 104e, the deformation of the load transmission members 104d, 104e in the direction perpendicular to the load applying direction can be effectively regulated. In addition, in the ribs 103a to 103d, the horizontal dimension is smaller at portions other than the bent portions than the bent portions. As such, the load transmission members 104d, 104e deforms more easily at the portions other than the bent portions in the direction perpendicular to the load applying direction than the bent portions. Therefore, the load is more easily transmitted to the portions other than the bent portions than the bent portions. Accordingly, the loss of the load transmission due to structure such as the shape of the bumper reinforcement member 32 is compensated. Thus, the collision of the bumper 2 with a pedestrian is accurately detected irrespective of the position with respect to the longitudinal direction of the bumper 2.

In the first embodiment, the horizontal dimension of the load transmission members 101d, 101e is varied. In the second embodiment, the horizontal dimension of each of the ribs 103a to 103d of the sensor supporting plate 103 is varied. However, horizontal dimensions of both of the load transmission members and the ribs of the sensor supporting member can be varied. Also in this case, advantageous effects similar to the first and second embodiments can be provided.

## Claims

1. A collision detection apparatus (10) for a vehicle that defines a horizontal plane, comprising:
a light generating means (102a) for generating light;
an optical fiber (101a) through which the light is transmitted;
a light receiving means (102b) for receiving the light from the optical fiber (101a);
a collision determination means (102c) for determining a collision based on a detection result of the light receiving means (102b); and
a load transmission means (101d, 101e) extending along the optical fiber (101a) for transmitting a load to the optical fiber (101a), wherein the load transmission means (101d, 101e) defines an axis and a horizontal dimension in the vehicle front and rear direction extending through the axis and parallel to the horizontal plane of the vehicle, **characterized in that**
the horizontal dimension of the load transmission means (101d, 101e) varies along the axis such that equal loads at different positions are transmitted to the optical fiber within a predetermined range; and
wherein the load transmission means (101d, 101e) surrounds the optical fiber (101a); and
wherein the optical fiber (101a) is arranged along a bumper reinforcement member (32) of the vehicle, the bumper reinforcement member (32) has a middle portion, end portions and bent portions between the middle portion and the end portions, and
the horizontal dimension of the load transmission means (101d, 101e) is larger at positions corresponding to the bent portions of the bumper reinforcement member (32) than positions corresponding to remaining portions of the bumper reinforcement member (32).

2. The collision detection apparatus (10) according to claim 1, further comprising:
a load concentration plate (101b, 101c) having a plurality of projections (101f) for transmitting a load to the optical fiber (101a) in a concentrated manner by bending the optical fiber (101a), the plurality of projections (101f) being arranged at predetermined intervals, wherein
the load transmission means (101d, 101e surrounds the load concentration plate (101b, 101c) and optical fiber (101a) in a condition that the projections (101f) of the load concentration plate (101b, 101c) are in contact with the optical fiber (101a).

3. The collision detection apparatus (10) according to claim 2, wherein
the load concentration plate (101b, 101c) is disposed along one of a front side and a rear side of the optical fiber (101a).

4. The collision detection apparatus (10) according to any one of claims 1 to 3, wherein
the horizontal dimension of the load transmission means (101d, 101e) gradually increases from a position corresponding to the middle portion of the bumper reinforcement member (32) toward positions corresponding to the bent portions of the bumper reinforcement member (32).

5. The collision detection apparatus (10) according to any of claims 1 to 4, wherein
the horizontal dimension of the load transmission means (101d, 101e) gradually reduces from positions corresponding to the bent portions of the bumper reinforcement member (32) toward positions corresponding to the end portions of the bumper reinforcement member (32).

6. The collision detection apparatus (10) according to any of claims 1 to 5, further comprising:
a sensor supporting plate (100) having a rib (100a, 100b, 100c, 100d) supporting the load transmission means 101d, 101e),
wherein the horizontal dimension of the load transmission means (101d, 101e) is greater than a horizontal dimension of the rib (100a, 100b, 100c, 100d) .

7. The collision detection apparatus (10) according to any one of claims 1 to 6, further comprising:
a deformation regulating means (103, 103a, 103b, 103c, 103d) for regulating deformation of the load transmission means (101d(104d), 101e(104e)) such that equal loads at different positions are transmitted to the optical fiber (101a(104a)) within a predetermined range.

8. The collision detection apparatus (10) according to claim 7, wherein
the deformation regulating means (103) has a wall portion (103a, 103b, 103c, 103d)
the wall portion (103a, 103b, 103c, 103d) has an axis and a horizontal dimension extending through the axis and parallel to a horizontal plane of the vehicle, and
the horizontal dimension of the wall portion (103a, 103b, 103c, 103d) varies along the axis such that the equal loads at different positions are transmitted to the optical fiber within the predetermined range.

9. The collision detection apparatus (10) according to claim 8, wherein
the load transmission means (101d(104d), 101e(104e)) surrounds an outer periphery of the optical fiber (101a(104a)), and
the wall portion (103a, 103b, 103c, 103d) contacts the load transmission means (101d(104d), 101e(104e)).

10. The collision detection apparatus (10) according to claim 8 or 9, wherein
the optical fiber (101a(104a)) extends along a bumper reinforcement member (32) of the vehicle, the bumper reinforcement member (32) having a middle portion, end portions and bent portions between the middle portion and the end portions, and
the horizontal dimension of the wall portion (103a, 103b, 103c, 103d) is larger at positions corresponding to the bent portions of the bumper reinforcement member (32) than positions corresponding to other portions of the bumper reinforcement member (32).

11. The collision detection apparatus (10) according to claim 10, wherein
the load transmission means (101d(104d), 101e(104e)) is located between the deformation regulation means (103) and the bumper reinforcement member (32).

12. The collision detection apparatus (10) according to any one of claims 8 to 11 wherein
the deformation regulating means (103) has a plurality of wall portions (103a, 103b, 103c, 103d) including the wall portion, and
the optical fiber (101a(104a)) is supported between the wall portions (103a, 103b, 103c, 103d) through the load transmission means (101d(104d), 101e(104e)).

13. The collision detection apparatus (10) according to any one of claims 7 to 12, wherein
the deformation regulating means is provided by a sensor supporting plate (103) having a rectangular plate shape,
the sensor supporting plate (103) has wall portions (103a, 103b, 103c, 103d) on a rear surface for regulating deformation of the optical fiber (101 a),
the wall portions (103a, 103b, 103c, 103d) project in a rearward direction of the vehicle and extend in a longitudinal direction of the sensor supporting plate (103), and
the optical fiber (101a) is held by the wall portions (103a, 103b, 103c, 103d) through the load transmission means (101d(104d), 101 e(104e)).

## Patentansprüche

1. Kollisionserfassungsvorrichtung (10) für ein Fahrzeug, die eine horizontale Ebene definiert, aufweisend:
eine Lichterzeugungseinrichtung (102a) zum Erzeugen von Licht;
einen Lichtwellenleiter (101a), durch den das Licht übertragen wird;
eine Lichtempfangseinrichtung (102b) zum Empfangen des Lichts von dem Lichtwellenleiter (101 a);
eine Kollisionsbestimmungseinrichtung (102c) zum Bestimmen einer Kollision basierend auf einem Erfassungsergebnis der Lichtempfangseinrichtung (102b); und
eine Belastungsübertragungseinrichtung (101d, 101e), die sich entlang des Lichtwellenleiters (101a) zum Übertragen einer Belastung auf den Lichtwellenleiter (101a) erstreckt, wobei die Belastungsübertragungseinrichtung (101 d, 101 e) eine Achse und eine horizontale Abmessung in der vorderen und hinteren Richtung des Fahrzeugs, die sich durch die Achse und parallel zu der horizontalen Ebene des Fahrzeugs erstreckt, definiert, **dadurch gekennzeichnet, dass**
die horizontale Abmessung der Belastungsübertragungseinrichtung (101d, 101e) entlang der Achse derart variiert, dass gleich große Belastungen an unterschiedlichen Positionen auf den Lichtwellenleiter innerhalb eines vorbestimmten Bereichs übertragen werden; und
wobei die Belastungsübertragungseinrichtung (101d, 101e) den Lichtwellenleiter (101a) umgibt; und
wobei der Lichtwellenleiter (101a) entlang eines Stoßfängerverstärkungselements (32) des Fahrzeugs angeordnet ist, wobei das Stoßfängerverstärkungselement (32) einen mittleren Bereich, Endbereiche und gebogene Bereiche zwischen dem mittleren Bereich und den Endbereichen aufweist, und
die horizontale Abmessung der Belastungsübertragungseinrichtung (101 d, 101 e) an Positionen, die den gebogenen Bereichen des Stoßfängerverstärkungselements (32) entsprechen, größer ist als an Positionen, die den verbleibenden Bereichen des Stoßfängerverstärkungselements (32) entsprechen.

2. Kollisionserfassungsvorrichtung (10) nach Anspruch 1, ferner aufweisend:
eine Belastungskonzentrationsplatte (101b, 101 c) mit einer Mehrzahl von Vorsprüngen (101f) zum Übertragen einer Belastung an den Lichtwellenleiter (101a) in einer konzentrierten Weise durch Biegen des Lichtwellenleiters (101a), wobei die Mehrzahl der Vorsprünge (101f) in vorbestimmten Intervallen angeordnet sind, wobei
die Belastungsübertragungseinrichtung (101d, 101e) die Belastungskonzentrationsplatte (101b, 101c) und den Lichtwellenleiter (101a) in einem Zustand umgibt, in dem die Vorsprünge (101f) der Belastungskonzentrationsplatte (101b, 101c) mit dem Lichtwellenleiter (101a) in Kontakt sind.

3. Kollisionserfassungsvorrichtung (10) nach Anspruch 2, wobei die Belastungskonzentrationsplatte (101b, 101c) entlang einer Vorderseite und einer Rückseite des Lichtwellenleiters (101 a) angeordnet ist.

4. Kollisionserfassungsvorrichtung (10) nach einem der Ansprüche 1 bis 3, wobei
die horizontale Abmessung der Belastungsübertragungseinrichtung (101d, 101e) von einer Position, die dem mittleren Bereich des Stoßfängerverstärkungselements (32) entspricht, zu Positionen, die den gebogenen Bereichen des Stoßfängerverstärkungselements (32) entsprechen, allmählich zunimmt.

5. Kollisionserfassungsvorrichtung (10) nach einem der Ansprüche 1 bis 4, wobei
die horizontale Abmessung der Belastungsübertragungseinrichtung (101d, 101e) von Positionen, die den gebogenen Bereichen des Stoßfängerverstärkungselements (32) entsprechen, zu Positionen, die den Endbereichen des Stoßfängerverstärkungselements (32) entsprechen, allmählich abnimmt.

6. Kollisionserfassungsvorrichtung (10) nach einem der Ansprüche 1 bis 5, ferner aufweisend:
eine Sensortragplatte (100) mit einer Rippe (100a, 100b, 100c, 100d), die die Belastungsübertragungseinrichtung (101d, 101e) trägt,
wobei die horizontale Abmessung der Belastungsübertragungseinrichtung (101d, 101e) größer ist als eine horizontale Abmessung der Rippe (100a, 100b, 100c, 100d).

7. Kollisionserfassungsvorrichtung (10) nach einem der Ansprüche 1 bis 6, ferner aufweisend:
eine Verformungsreguliereinrichtung (103, 103a, 103b, 103c, 103d) zum Regulieren einer Verformung der Belastungsübertragungseinrichtung(101d(104d), 101e(104e)) derart, dass gleich große Belastungen an unterschiedlichen Positionen auf den Lichtwellenleiter (101a(104a)) innerhalb eines vorbestimmten Bereichs übertragen werden.

8. Kollisionserfassungsvorrichtung (10) nach Anspruch 7, wobei
die Verformungsreguliereinrichtung (103) einen Wandbereich (103a, 103b, 103c, 103d) aufweist;
der Wandbereich (103a, 103b, 103c, 103d) eine Achse und eine horizontale Abmessung aufweist, die sich durch die Achse und parallel zu einer horizontalen Ebene des Fahrzeugs erstreckt, und
die horizontale Abmessung des Wandbereichs (103a, 103b, 103c, 103d) entlang der Achse derart variiert, dass die gleich großen Belastungen an unterschiedlichen Positionen auf den Lichtwellenleiter innerhalb des vorbestimmten Bereichs übertragen werden.

9. Kollisionserfassungsvorrichtung (10) nach Anspruch 8, wobei
die Belastungsübertragungseinrichtung (101d(104d), 101e(104e)) einen äußeren Umfang des Lichtwellenleiters (101a(104a)) umgibt, und
der Wandbereich (103a, 103b, 103c, 103d) die Belastungsübertragungseinrichtung (101d(1104d), 101 e(104e)) kontaktiert.

10. Kollisionserfassungsvorrichtung (10) nach Anspruch 8 oder 9, wobei
der Lichtwellenleiter (101a(104a)) sich entlang eines Stoßfängerverstärkungselements (32) des Fahrzeugs erstreckt, wobei das Stoßfängerverstärkungselement (32) einen mittleren Bereich, Endbereiche und gebogene Bereiche zwischen dem mittleren Bereich und den Endbereichen aufweist, und
die horizontale Abmessung des Wandbereichs (103a, 103b, 103c, 103d) an Positionen, die den gebogenen Bereichen des Stoßfängerverstärkungselements (32) entsprechen, größer ist als an Positionen, die den anderen Bereichen des Stoßfängerverstärkungselements (32) entsprechen.

11. Kollisionserfassungsvorrichtung (10) nach Anspruch 10, wobei
die Belastungsübertragungseinrichtung (101d(104d), 101e(104e)) zwischen der Verformungsregulierungseinrichtung (103) und dem Stoßfängerverstärkungselement (32) positioniert ist.

12. Kollisionserfassungsvorrichtung (10) nach einem der Ansprüche 8 bis 11, wobei
die Verformungsregulierungseinrichtung (103) eine Mehrzahl von Wandbereichen (103a, 103b, 103c, 103d) aufweist, die den Wandbereich beinhalten, und
der Lichtwellenleiter (101a(104a)) zwischen den Wandbereichen (103a, 103b, 103c, 103d) durch die Belastungsübertragungseinrichtung (101d(104d), 101 e(104e)) getragen wird.

13. Kollisionserfassungsvorrichtung (10) nach einem der Ansprüche 7 bis 12, wobei
die Verformungsregulierungseinrichtung durch eine Sensortragplatte (103) versehen ist, die die Form einer rechtwinkeligen Platte aufweist,
die Sensortragplatte (103) Wandbereiche (103a, 103b, 103c, 103d) auf einer hinteren Oberfläche zum Regulieren einer Verformung des Lichtwellenleiters (101a) aufweist,
die Wandbereiche (103a, 103b, 103c, 103d) in einer Rückwärtsrichtung des Fahrzeugs vorstehen und sich in einer Längsrichtung der Sensortragplatte (103) erstrecken, und
der Lichtwellenleiter (101a) durch die Wandbereiche (103a, 103b, 103c, 103d) über die Belastungsübertragungseinrichtung (101d(104d), 101e(104e)) gehalten werden.

## Revendications

1. Appareil (10) de détection de collision pour un véhicule qui définit un plan horizontal, comprenant :
un moyen (102a) de génération de lumière destiné à générer de la lumière ;
une fibre optique (101a) à travers laquelle la lumière est transmise ;
un moyen (102b) de réception de lumière destiné à recevoir la lumière de la fibre optique (101a) ;
un moyen (102c) de détermination de collision destiné à déterminer une collision d'après un résultat de détection du moyen (102b) de réception de lumière ; et
un moyen (101d, 101e) de transmission de charge s'étendant le long de la fibre optique (101a) destiné à transmettre une charge à la fibre optique (101a), où le moyen (101d, 101e) définit un axe et une dimension horizontale dans les directions avant et arrière du véhicule s'étendant à travers l'axe et parallèlement au plan horizontal du véhicule, **caractérisé en ce que**
la dimension horizontale du moyen (101d, 101e) de transmission de charge varie le long de l'axe de telle sorte que des charges égales au niveau de positions différentes sont transmises à la fibre optique dans une plage prédéterminée ; et
où le moyen (101d, 101e) de transmission de charge entoure la fibre optique (101a) ; et
où la fibre optique (101a) est agencée le long d'un élément (32) de renfort de pare-choc du véhicule, l'élément (32) de renfort du pare-choc a une partie médiane, des parties d'extrémité et des parties pliées entre la partie médiane et les parties d'extrémité, et
la dimension horizontale du moyen (101d, 101e) de transmission de charge est plus importante au niveau de positions correspondant aux parties pliées de l'élément (32) de renfort de pare-choc qu'à des positions correspondant aux parties restantes de l'élément (32) de renfort de pare-choc.

2. Appareil (10) de détection de collision selon la revendication 1, comprenant en outré :
une plaque (101b, 101c) de concentration de charge ayant plusieurs projections (101f) destinées à transmettre un charge à la fibre optique (101a) de manière concentrée en pliant la fibre optique (101a), les plusieurs projections (101f) étant agencées à intervalles prédéterminés, où
le moyen de transmission de charge (101d, 101e) entoure la plaque (101b, 101c) de concentration de charge et la fibre optique (101a) dans une condition où les projections (101f) de la plaque (101b, 101c) de concentration de charge sont en contact avec la fibre optique (101a).

3. Appareil (10) de détection de collision selon la revendication 2, où
la plaque (101b, 101c) est disposée le long d'un coté avant et d'un coté arrière de la fibre optique (101a).

4. Appareil (10) de détection de collision selon l'une quelconque des revendications 1 à 3, où
la dimension horizontale du moyen (101d, 101e) de transmission de charge augmente progressivement d'une position correspondant à la partie médiane de l'élément (32) de renfort de pare-choc vers des positions correspondant aux parties pliées de l'élément (32) de renfort de pare-choc.

5. Appareil (10) de détection de collision selon l'une quelconque des revendications 1 à 4, où
la dimension horizontale du moyen (101d, 101e) de transmission de charge se réduit progressivement de positions correspondant aux parties pliées de l'élément (32) de renfort de pare-choc vers des positions correspondant aux parties d'extrémité de l'élément (32) de renfort de pare-choc.

6. Appareil (10) de détection de collision selon l'une quelconque des revendications 1 à 5, comprenant en outré :
une plaque (100) de support de capteur ayant une nervure (100a, 100b, 100c, 100d) supportant le moyen (101d, 101e) de transmission de charge,
où la dimension horizontale du moyen (101d, 101e) de transmission de charge est plus grande qu'une dimension horizontale de la nervure (100a, 100b, 100c, 100d).

7. Appareil (10) de détection de collision selon l'une quelconque des revendications 1 à 6, comprenant en outre :
un moyen (103, 103a, 103b, 103c, 103d) de régulation de déformation destiné à réguler une déformation du moyen (101d(104d), 101e(104e)) de transmission de charge de telle sorte que des charges égales au niveau de différentes positions sont transmises à la fibre (101a(104a)) optique dans une plage prédéterminée.

8. Appareil (10) de détection de collision selon la revendication 7, où
le moyen (103) de régulation de déformation a une partie formant paroi (103a, 103b, 103c, 103d)
la partie formant paroi (103a, 103b, 103c, 103d) a un axe et une dimension horizontale s'étendant à travers l'axe et parallèle au plan horizontal du véhicule, et
la dimension horizontale de la partie formant paroi (103a, 103b, 103c, 103d) varie le long de l'axe de telle sorte que les charges égales au niveau de différentes positions sont transmises à la fibre optique dans la plage prédéterminée.

9. Appareil (10) de détection de collision selon la revendication 8, où
le moyen (101d(104d), 101e(104e)) entoure une périphérie extérieure de la fibre (101a(104a)), et
la partie formant paroi (103a, 103b, 103c, 103d) rentre en contact avec le moyen (101d(104d), 101e(104e)) de transmission de charge.

10. Appareil (10) de détection de collision selon la revendication 8 ou 9, où
la fibre optique (101a(104a)) s'étend le long d'un élément (32) de renfort de pare-choc du véhicule, l'élément (32) de renfort de pare-choc ayant une partie médiane, des parties d'extrémité et des parties pliées entre la partie médiane et les parties d'extrémité, et
la dimension horizontale de la partie formant paroi (103a, 103b, 103c, 103d) est plus importante au niveau de positions correspondant aux parties pliées de l'élément (32) de renfort de pare-choc qu'à des positions correspondant à d'autres parties de l'élément (32) de renfort de pare-choc.

11. Appareil (10) de détection de collision selon la revendication 10, où
le moyen (101d(104d), 101e(104e)) de transmission de charge est placé entre le moyen (103) de régulation de déformation et l'élément (32) de renfort de pare-choc.

12. Appareil (10) de détection de collision selon l'une quelconque des revendications 8 à 11, où
le moyen (103) de régulation de déformation a plusieurs parties formant parois (103a, 103b, 103c, 103d) y compris la partie formant paroi, et
la fibre optique (101a(104a)) est supportée entre les parties formant parois (103a, 103b, 103c, 103d) à travers le moyen (101d(104d), 101e(104e)) de transmission de charge.

13. Appareil (10) de détection de collision selon l'une quelconque des revendications 7 à 12, où
le moyen de régulation de déformation est prévu par une plaque (103) de support de capteur ayant une forme de plaque rectangulaire,
la plaque (103) de support de capteur a des parties formant parois (103a, 103b, 103c, 103d) sur une surface arrière pour réguler une déformation de la fibre optique (101a).
les parties formant paroi (103a, 103b, 103c, 103d) se projettent dans une direction arrière du véhicule et s'étendent dans une direction longitudinale de la plaque (103) de support de capteur, et
la fibre optique (101a) est maintenue par les parties formant paroi (103a, 103b, 103c, 103d) à travers le moyen (101d(104d), 101e(104e)) de transmission de charge.
